# EUROPÄISCHE PATENTSCHRIFT

(11) **EP 2 981 366 B1**
(45) Veröffentlichungstag und Bekanntmachung des Hinweises auf die Patenterteilung: **01.03.2017**
(21) Anmeldenummer: 14715288.8
(22) Anmeldetag: 03.04.2014
(51) Int. Cl.: B05B 15/04, B05B 15/02, G01N 11/00, B05B 12/10

(54) **BESCHICHTUNGSVORRICHTUNG MIT EINER VISKOSITÄTSKONSTANTHALTUNG DES LACKS**
COATING APPARATUS WITH PAINT VISCOSITY REGULATION
DISPOSITIF DE REVETEMENT AVEC REGULATION DE VISCOSITÉ DE LA PEINTURE

(30) Priorität: 03.04.2013 DE 102013103321
(43) Veröffentlichungstag der Anmeldung: 10.02.2016
(73) Patentinhaber: Josef Schiele OHG, 56651 Niederzissen (DE)
(72) Erfinder: SCHIELE, Stefan, 56651 Niederzissen (DE)
(74) Vertreter: Wolff, Felix
(86) Internationale Anmeldenummer: PCT/EP2014/056738
(87) Internationale Veröffentlichungsnummer: WO 2014/161961

(56) Entgegenhaltungen:
- EP-A1- 2 762 239
- DE-A1- 3 925 016
- DE-A1-102010 030 280
- DE-U1-202010 004 710
- JP-A- 2000 275 158
- US-A- 2 848 353
- US-A1- 2011 204 490
- US-A1- 2012 064 349

## Beschreibung

Die vorliegende Erfindung betrifft eine Beschichtungsvorrichtung gemäß dem Oberbegriff des Patentanspruchs 1. Des Weiteren betrifft die vorliegende Erfindung ein Verfahren zum Lackieren gemäß dem Oberbegriff des Patentanspruchs 7.

Aus der EP 2 353 730 A1 ist eine Vorrichtung zur Unterdruckapplikation vom Primer bekannt, die eine Auftragsdüse aufweist, welche eine Auftragkammer und eine Absaugkammer umfasst. Über diese Vorrichtung kann ein Primer, bei dem Wasser der Hauptbestandteil des Lösungsmittels ist, auf ein sich gegenüber der Auftragsdüse bewegendes Werkstück aufgetragen werden. Durch einen zwischen der Auftragsdüse und der Oberfläche des Werkstücks gebildeten Spalt wird Umgebungsluft in die Absaugkammer angesaugt. Dabei wird überschüssiger Primer wieder von der Oberfläche des Werkstücks abgesaugt und in die Absaugkammer mitgerissen.

Bei wasserbasierten Lacken kommt es durch Verdunsten von Wasser zu einem Anstieg des Festkörperanteils und damit zu einem Anstieg der Viskosität. Dieses Verdunsten tritt beispielsweise bei einem Lackierverfahren auf, bei dem die Schichtdicke des Lacks über einen Luftstrom, der durch einen Unterdruck erzeugt wird, eingestellt wird. Der Unterdruck wird beispielsweise an einem Beschichtungskopf oder die Applikationskammer angelegt, der Luft durch einen Spalt einsaugt, wodurch die Schichtdicke des aufgetragenen Lackes reguliert wird. Der erzeugte Luftstrom wird bereits heute teilweise klimatisiert um ein Antrocknen von Lack in den Auftragseinheiten zu verhindern bzw. die Wartungsintervalle zu verlängern. Im Regelfall werden die Auftragseinheiten hierzu in dem Bereich des aktuellen Taupunktes heruntergekühlt. Oftmals werden mit derartigen Beschichtungsvorrichtungen aber keine konstanten Beschichtungsergebnisse erzielt.

In der EP 0 090 606 A2 wird eine Beschichtungsvorrichtung mit einem Tank für den aufzutragenden Lack offenbart, bei welcher zur Erhaltung der Viskosität des Lacks zusätzliches Lösungsmittel in den Tank eingeleitet werden kann.

Es war die Aufgabe der vorliegenden Erfindung eine Beschichtungsvorrichtung zur Verfügung zu stellen, die die Nachteile des Standes der Technik nicht aufweist.

Gelöst wird die Aufgabe mit einer Beschichtungsvorrichtung mit den Merkmalen des Patentanspruchs 1. Vorteilhafte Ausgestaltungen der Beschichtungsvorrichtung sind Gegenstand der abhängigen Ansprüche.

Die vorliegende Erfindung betrifft eine Beschichtungsvorrichtung, die einen wasserbasierten Lack auf ein Werkstück aufträgt. Wasserbasiert im Sinne der Erfindung bedeutet, dass der Lack als Lösemittel Wasser aufweist. Sobald dieses Lösemittel zumindest teilweise verdampft oder verdunstet, härtet bzw. trocknet der Lack. Die Beschichtungsvorrichtung weist erfindungsgemäß eine Applikationskammer auf, durch die der Lackauftrag erfolgt, wobei beim Beschichten zwischen dem Auftragskopf und dem Werkstück eine Relativbewegung vorhanden ist. Die Applikationskammer ist ortsfest und das Werkstück bewegt sich relativ zu dem Beschichtungskopf. Weiterhin erfindungsgemäß wird die Schichtdicke, mit der der Lack auf das Werkstück aufgetragen wird durch einen Luftstrom reguliert, der überschüssigen Lack von dem Werkstück entfernt. Dieser Luftstrom wird dadurch gezeugt, dass an der Applikationskammer ein Unterdruck angelegt wird, mit dem Luft durch einen Spalt zwischen dem Werkstück und der Applikationskammer gesaugt wird, der überschüssigen Lack von dem Werkstück abstreift.

Vorzugsweise wird dieser Luftstrom stromabwärts von dem Beschichtungskopf oder der Applikationskammer einem Abscheidesystem zugeführt, das die Lackbestandteile zumindest teilweise, vorzugsweise nahezu vollständig, aus dem Luftstrom entfernt.

Erfindungsgemäß weist nun die Vorrichtung ein Mittel auf, mit dem die Viskosität des Lackes konstant gehalten wird. Insbesondere kann dem Lack mit dem Mittel Wasser zugeführt werden, wodurch sich die Viskosität des Lackes vermindert. Es ist aber auch möglich die Viskosität des Lackes zu erhöhen, indem Wasser aus dem Lack entfernt wird.

Erfindungsgemäß ist das Mittel eine Kühlung, die den Luftstrom unter dessen Taupunkt kühlt, so dass Wasser auskondensiert, das der Luftstrom zumindest teilweise mitreißt. Diese Kühlung des Luftstroms kann stromaufwärts, im und/oder stromabwärts von dem Beschichtungskopf erfolgen. Beispielsweise wird der Beschichtungskopf und/oder der Abscheider, der den Lack und/oder Wassertropfen aus dem Luftstrom entfernt, gekühlt. Es ist aber auch möglich den Lack selbst zu kühlen, so dass der Luftstrom, wenn er über den Lack streicht, gekühlt wird und dadurch Wasser aus dem Luftstrom auskondensiert. Das auskondensierte Wasser wird dann vorzugsweise in dem Abscheider, der den Lack aus dem Luftstrom entfernt, ebenfalls abgeschieden und vermischt sich besonders bevorzugt in dem Abscheider mit dem wasserbasierten Lack.

Beim Erkennen eines Viskositätsanstiegs wird die angesaugte Luft, die vorzugsweise bei ihrer Ansaugtemperatur wasserdampfgesättigt ist, gezielt unter ihren Taupunkt abkühlt, so dass Wasserdampf aus dem Luftstrom auskondensiert.

Alternativ oder zusätzlich wird der Luftstrom über einen Luftbefeuchter befeuchtet. Das sich in beiden Fällen bildende Kondensat wird aus dem Luftstrom abgeschieden und mit dem Lack vermischt. Dadurch kommt es zu einem zeitlich und anteilmäßig regelbaren Wassereintrag in das Lacksystem durch Kondensation von Wasserdampf aus dem Luftstrom.

Die Befeuchtung des Luftstroms kann beispielsweise mit mindestens einer Luftbefeuchtungsdüse, insbesondere Wasser- und/oder Wasserdampfdüse, erfolgen. Die Anordnung der Luftbefeuchtungsdüse(n) kann nur auf einer Seite des Auftragskopfes erfolgen, wobei vorzugsweise sämtliche Bereiche, über die der Luftstrom in den Auftragskopf eingesaugt wird von den Luftbefeuchtungsdüsen befeuchtet werden.

Vorzugsweise weist die Vorrichtung einen Abscheider auf, der den Lack und/oder das Wasser aus dem Luftstrom abscheidet. Vorzugsweise mischen sich das abgeschiedene Wasser und der Lack in dem Abscheider. Vorzugsweise weist der Abscheider einen Tank auf, in dem sich das abgeschiedene Wasser und der Lack mischen. Dieses Gemisch wird dann besonders bevorzugt mit Frischlack gemischt.

Vorzugsweise wird der abgeschiedene Lack und/oder das abgeschiedene Wasser recycliert, d.h. zur Beschichtung von Werkstücken erneut eingesetzt.

Vorzugsweise weist die Beschichtungsvorrichtung ein Mittel zur Bestimmung des Zustands eines wasserbasierten Lacks auf. Mit diesem Mittel kann beispielsweise überprüft werden, wie sich die Viskosität des wasserbasierten Lacks vor dessen Auftrag auf das Werkstück verändert. Vorzugsweise erfolgt die Prüfung intermittierend. Besonders bevorzugt wird dabei die Abweichung von einem Referenzwert gemessen. Dadurch kann beispielsweise überprüft werden, wie sich die Viskosität des wasserbasierten Lackes, insbesondere einer Charge, verändert. Das Signal des Mittels wird zur Steuerung und/oder Regelung des Mittels, mit dem die Viskosität des Lackes wahlweise verändert wird, eingesetzt. Mit dem Mittel zur Bestimmung des Zustands des wasserbasierten Lacks kann aber auch festgestellt werden, ob dieser schäumt.

Vorzugsweise weist die Vorrichtung eine Temperaturmessung auf, die die Temperatur des Lackes, insbesondere bevor oder während dessen Viskosität bestimmt wird, ermittelt. Diese Temperaturmessung wird vorzugsweise zur Korrektur einer Viskositätsmessung herangezogen.

Vorzugsweise weist die Vorrichtung einen Lackfilter auf, der ungelöste Feststoffpartikel aus dem Lack herausfiltert. Vorzugsweise wird dieser Filter gekühlt, beispielsweise um den Lack zu kühlen.

Alternativ oder zusätzlich kann die Vorrichtung eine Wasserzugabe aufweisen. Diese Wasserzugabe kann an einer beliebigen Stelle in dem Lackkreislauf erfolgen. Vorzugsweise erfolgt die Dosierung durch eine Pumpe, die mit dem Signal des Mittels zur Bestimmung des Zustands des wasserbasierten Lacks gesteuert oder geregelt wird. Vorzugsweise erfolgt die Wasserzugabe jedoch stromaufwärts oder stromabwärts von dem Mittel zur Bestimmung des Zustands des wasserbasierten Lacks.

Vorzugsweise weist die Vorrichtung einen isobaren Druckbehälter auf. Dieser Druckbehälter kann Teil des erfindungsgemäßen Mittels zur Bestimmung des Zustands eines wasserbasierten Lacks sein. Der Lack kann aus dem Druckbehälter zu dem Auftragskopf strömen. Dabei dient die Druckdifferenz zwischen Druckbehälter und dem Auftragskopf als Fördermittel für den Lack. Vorzugsweise wird der Abfluss aus dem Druckbehälter über ein oder mehrere Regelventil geregelt.

Alternativ ist der Druckbehälter parallel im Lackfördersystem vorgesehen und dient nur der Messung des Zustands des Lackes, insbesondere dessen Viskosität.

Vorzugsweise weist die Vorrichtung eine Pumpe für den Lack, insbesondere eine Membranpumpe, auf. Vorzugsweise ist stromaufwärts oder stromabwärts von der Pumpe ein Filter vorgesehen, der den Lack filtert.

Die erfindungsgemäße Vorrichtung hat den Vorteil, dass das Wasser langsam und kontrolliert, insbesondere in die gesamte Lackvorlage, eingebracht wird und dadurch die Gefahr einer Schaumbildung des Lackes stark reduziert wird. Darüber hinaus werden Lackantrocknungen beispielsweise in dem Auftragskopf zumindest weitgehend verhindert, was die Reinigung vereinfacht.

Um den Prozess kontrolliert durchzuführen, wird die Viskosität im laufenden Betrieb gemessen. Dies kann über die oben beschriebenen Messsysteme erfolgen.

Ein weiterer Gegenstand der vorliegenden Erfindung ist ein Verfahren mit den Merkmalen des Patentanspruchs 7.

Erfindungsgemäß wird aus dem Luftstrom Wasser auskondensiert und das kondensierte Wasser mit dem Lack vermischt. Dadurch vermindert sich dessen Viskosität. Das Auskondensieren des Wassers kann beispielsweise stromaufwärts, im und/oder stromabwärts von dem Auftragskopf erfolgen. Vorzugsweise wird der Beschichtungskopf und/oder der Abscheider, mit dem Lack und/oder Wasser aus dem Luftstrom abgeschieden wird, gekühlt. Weiterhin bevorzugt wird der Lack, bevor er in den Auftragskopf gespeist wird, gekühlt.

Vorzugsweise wird die Kühlung des Luftstroms und/oder des Lackstroms durch ein Mittel, das Veränderungen an der Viskosität des Lackes feststellt, geregelt.

Für den Fall, dass die Viskosität des Lackes zu gering ist, kann aber auch Wasser aus dem Lack entfernt werden, beispielsweise indem der Luftstrom und/oder der Lackstrom angewärmt wird und/oder die Kühltemperatur der gekühlten Anlagenteile angehoben wird und dadurch Wasser aus dem Lack entweicht.

Beschrieben wird ferner ein Mittel zur Bestimmung des Zustands eines wasserbasierten Lacks aufweisend einen isobaren Behälter, der den wasserbasierten Lack aufnimmt und der eine erste Füllstandsmessung und eine zweite Füllstandsmessung sowie eine Zeitmessung aufweist, die die Zeit, zum Auffüllen von dem ersten Füllstand zum zweiten Füllstand und/oder zum Entleeren von dem zweiten Füllstand zu dem ersten Füllstand ermittelt. Die jeweilige Zeitspanne erlaubt Rückschlüsse beispielsweise auf die Veränderung der Viskosität des Lackes und/oder auf das Schaumverhalten des Lackes.

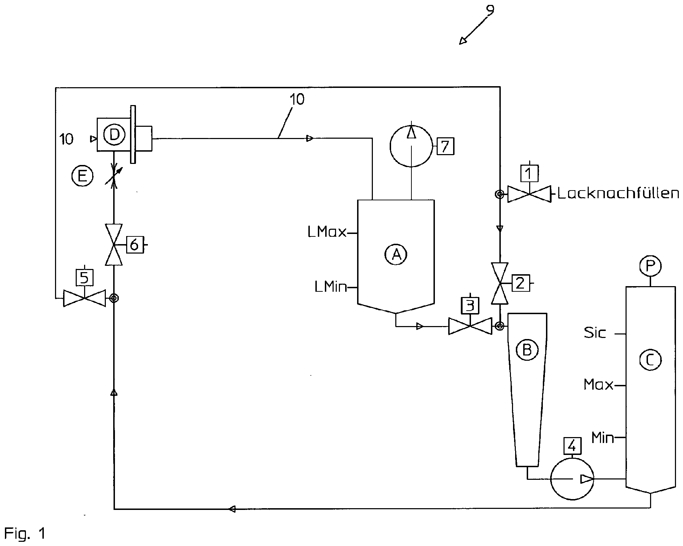

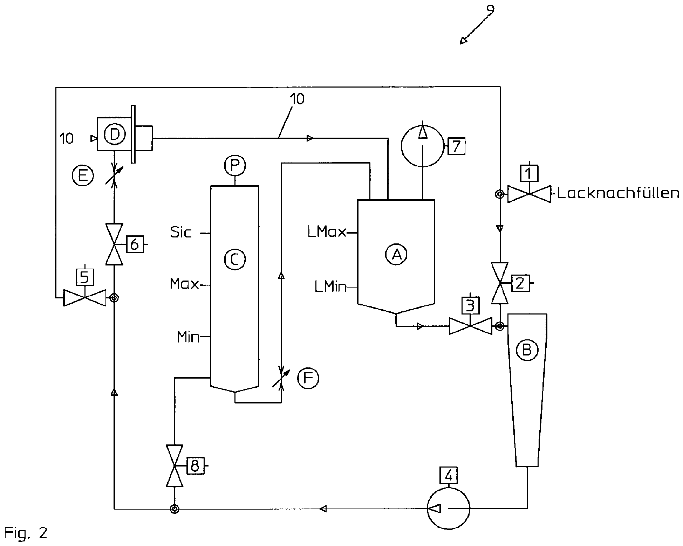

Im Folgenden werden die Erfindungen anhand der Figuren 1 und 2 und einer Tabelle erläutert. Diese Erläuterungen sind lediglich beispielshaft und schränken den allgemeinen Erfindungsgedanken nicht ein. Die Erläuterungen gelten für alle Gegenstände der vorliegenden Erfindung gleichermaßen.
- Figur 1: zeigt eine erste Ausführungsform der vorliegenden Erfindung
- Figur 2: zeigt eine weitere Ausführungsform der vorliegenden Erfindung

Figur 1 zeigt die erfindungsgemäße Beschichtungsvorrichtung 9, die einen Beschichtungskopf D aufweist, mit dem ein wasserbasierter Lack auf ein Werkstück aufgetragen wird. Der Lack wird dem Beschichtungskopf über das Ventil 6 zugeführt. Außerdem liegt an dem Beschichtungskopf ein Unterdruck an, der einen Luftstrom 10 in den Beschichtungskopf saugt, mit dem die Dicke der Lackschicht reguliert wird, indem der Luftstrom überschüssigen Lack von dem Werkstück wieder entfernt. Der mit Lack beladene Luftstrom 10 wird sodann vorzugsweise über einen Abscheider A geleitet, der den Lack zumindest teilweise, vorzugsweise nahezu vollständig von dem Luftstrom trennt. Der abgetrennte Lack wird in dem Abscheider A aufgefangen und zur Beschichtung recykliert. An dem Abscheider A liegt der vorzugsweise einstellbare Unterdruck 7 an, mit dem der Luftstrom 10 erzeugt wird. Erfindungsgemäß weist die Vorrichtung nun ein Mittel auf, mit dem die Viskosität des Lackes wahlweise verändert werden kann. Dieses Mittel kann ein Mittel sein, mit dem der Luftstrom so befeuchtet wird, dass sich Wasser stromaufwärts, im und/oder stromabwärts von dem Beschichtungskopf abscheidet. Dieses Mittel ist beispielsweise eine Düse, die Wasserdampf oder Wasser in den Luftstrom einleitet. Alternativ oder zusätzlich wird der Luftstrom gekühlt, so dass sich Wasser stromaufwärts, im und/oder stromabwärts von dem Beschichtungskopf abscheidet. Dieses abgeschiedene Wasser wird, beispielsweise in Form von Tropfen, vorzugsweise mit dem Luftstrom mitgerissen und besonders bevorzugt in dem Abscheider A ebenfalls abgeschieden und dort mit dem Lack vermischt. Der so verdünnte Lack wird beispielsweise mit Frischlack vermischt und erneut dem Beschichtungskopf zugeführt. Der Beschichtungskopf D und/oder der Abscheider A können gekühlt sein.

Der Lack wird durch die Pumpe 4 entweder aus dem Abscheider A mit Ventil 3 als recyklierter Lack und/oder über das Lacknachfüllventil 1 und/oder das Ventil 2 als Frischlack über den vorzugsweise vorhandenen Filter B in einen Druckbehälter C gefördert, in dem der Druck unabhängig vom Füllstand des Lackes konstant gehalten wird. Der Filter B und/oder der Druckbehälter können gekühlt sein. Sobald der Druckbehälter C über die Position "Max" mit Lack befüllt ist, wird die Pumpe "4" gestoppt. Während der Produktion wird der Lack, vorzugsweise aufgrund des Drucks in dem Behälter C, über das Ventil 6 und/oder die Regelvorrichtung E, vorzugsweise ein geregeltes Ventil, zu dem Beschichtungskopf D, beispielsweise einer Applikationskammer, einem Kantenbeschichtungskopf, einem Gießbalken, einer Sprühdüse oder dergleichen, gefördert und dort auf das Werkstück aufgetragen. Beispielsweise während des Anfahrens kann der Lack an dem Beschichtungskopf D vorbei und zurück in den Druckbehälter C gefördert werden. Der Lackfilter B kann auch stromabwärts von der Pumpe installiert werden. Die Einfüllfördermenge der Pumpe 4 ist vorzugsweise größer als die Ablassfördermenge des Druckbehälter. Die Pumpe läuft deshalb vorzugsweise intermittierend. Vorzugsweise ist die Pumpe eine Membranpumpe.

Nach Einstellung der Anlage, d.h. beispielsweise bei konstantem Lackverbrauch, wird die Zeit gemessen, die, vorzugsweise bei abgeschalteter Pumpe, benötigt wird, um den Druckbehälter bei konstantem Druck von dem maximalen Füllstand Max bis zum minimal Füllstandes Min zu entleeren und dieses Zeitintervall wird als Referenzwert festgelegt. Sollte dieses Zeitintervall sehr klein sein, so kann eine Summe aus mehreren nacheinander folgenden Messungen als Referenzwert angenommen werden. Dieselbe Messung wird auch für das Befüllen des Druckbehälters C vom Füllstand Min zum Füllstand Max durchgeführt. Diese Messungen werden dann während der Produktion regelmäßig von der Anlage durchgeführt und mit dem Referenzwert verglichen. Die Pumpenleistung bleibt dabei immer dieselbe. Bei der Vorrichtung gemäß Figur 1 wird der Beschichtungskopf aus dem Druckbehälter C gespeist.

Bei der Vorrichtung gemäß Figur 2 kann im Wesentlichen auf die Ausführungen gemäß Figur 1 Bezug genommen werden, wobei dieselben Bauteile mit denselben Bezugszeichen versehen sind. In dem vorliegenden Fall ist der Druckbehälter jedoch parallel zu dem Produktionskreislauf geschaltet und die der Lack wird mittels der Pumpe 4 in den Beschichtungskopf D gefördert. Ansonsten kann auf die Ausführungen gemäß Figur 1 Bezug genommen werden.

Aus den gemessenen Daten lassen sich folgende Zustände Rückschlüsse ziehen, die in der folgenden Tabelle zusammengefasst sind:

| **Zustands des Lackes in der Vorrichtung und/oder der Vorrichtung selbst** | **Befüllen** | **Entleeren** |
|---|---|---|
| **Viskosität und Zustand Lack identisch** | 0 | 0 |
| Lackfilter verstopft | + | 0 |
| Schaum im Lack | - | 0 |
| Lackauftrag verstopft / **Viskosität ist angestiegen** | 0 | + |
| **Viskosität ist angestiegen** | + | + |
| **Viskosität ist angestiegen** | - | + |
| Schaum im Lack | 0 | - |
| Lackfilter verstopft / Schaum im Lack / Viskosität zu niedrig | + | - |
| **Viskosität zu niedrig** | - | - |

| | | |
|---|---|---|
| 0 = Zeit unverändert im Vergleich zum Referenzwert / + = Zeit hat sich im Vergleich zum Referenzwert verlängert / - = Zeit hat sich im Vergleich zum Referenzwert verringert | | |

Durch die Überwachung des Befüllens und des Entleerens des Druckbehälters C ist es möglich festzustellen, ob es sich um eine Verstopfung der Vorrichtung oder um einen Viskositätsanstieg des Lackes handelt, so dass die Anlage automatisch die notwendigen Schritte (Erhöhung der Luftfeuchtigkeit und/oder Absenken der Kühltemperatur oder Zugabe von Wasser) einleiten kann.

### Bezugszeichenliste:

- 1: Nachfüllventil externer Lackbehälter
- 2: Ventil
- 3: Lacktankventil
- 4: Förderpumpe
- 5: Lackkreislaufventil
- 6: Beschichtungsventil
- 7: Unterdruckerzeugung, Vakuumpumpe
- 8: Messventil
- 9: Beschichtungsvorrichtung
- 10: Luftstrom
- A: Abscheidesystem, Lacktank, vorzugsweise gekühlt
- B: Lackfilter, gegebenfalls gekühlt
- C: Druckbehälter, gegebenenfalls gekühlt
- D: Auftragskopf, Auftragseinheit, gegebenenfalls gekühlt
- E: Regelvorrichtung Förderstrom Auftragseinheit
- F: Regelvorrichtung / Blende Druckbehälter Ablauf

## Patentansprüche

1. Beschichtungsvorrichtung (9) mit einer Applikationskammer, die einen wasserbasierten Lack auf ein sich relativ zu der Applikationskammer bewegendes Werkstück aufträgt, wobei an der Applikationskammer ein Unterdruck anliegt, der Luft (10) durch einen Spalt zwischen dem Werkstück und der Applikationskammer saugt und dadurch die Schichtdicke der Lackschicht auf dem Werkstück reguliert, **dadurch gekennzeichnet, dass** die Beschichtungsvorrichtung ein Mittel aufweist, das die Viskosität des wasserbasierten Lacks wahlweise verändert, wobei das Mittel den Luftstrom (10) unter dessen Taupunkt kühlt, so dass Wasser auskondensiert, das der Luftstrom zumindest teilweise mitreißt und/oder das den Luftstrom mit Wasserdampf übersättigt.

2. Beschichtungsvorrichtung (9) nach Anspruch 1, **dadurch gekennzeichnet, dass** sie einen Abscheider (A) aufweist, der Lack und/oder Wasser aus dem Luftstrom abscheidet.

3. Beschichtungsvorrichtung (9) nach Anspruch 2, **dadurch gekennzeichnet, dass** sie ein Mittel (3) aufweist, das den Lack und/oder das Wasser recycliert.

4. Beschichtungsvorrichtung (9) nach einem der voranstehenden Ansprüche, **dadurch gekennzeichnet, dass** sie ein Mittel (C) zur Bestimmung des Zustands eines wasserbasierten Lacks aufweist.

5. Beschichtungsvorrichtung (9) nach einem der voranstehenden Ansprüche, **dadurch gekennzeichnet, dass** sie eine Temperaturmessung aufweist, die die Temperatur des Lackes ermittelt.

6. Beschichtungsvorrichtung (9) nach einem der voranstehenden Ansprüche, **dadurch gekennzeichnet, dass** sie eine Wasserzugabe aufweist.

7. Verfahren zum Lackieren eines Werkstücks mit einem wasserbasierten Lack mit einem Beschichtungskopf (D), wobei in den Beschichtungskopf ein Luftstrom (10) eingeleitet wird, mit dem die Dicke der Lackschicht eingestellt wird, **dadurch gekennzeichnet, dass** der Luftstrom so unter seinen Taupunkt abgekühlt wird und/oder der Luftstrom mit Wasserdampf so gesättigt wird, dass sich Wasser stromaufwärts von dem Beschichtungskopf abscheidet und das abgeschiedene Wasser mit dem wasserbasierten Lack zumindest teilweise gemischt wird.

8. Verfahren nach Anspruch 7, **dadurch gekennzeichnet, dass** die Kühlung des Luftstroms durch ein Viskosimeter geregelt wird.

## Claims

1. Coating apparatus (9) with an application chamber which applies a water-based paint to a workpiece moving relative to the application chamber, wherein a vacuum is present at the application chamber which draws air (10) through a gap between the workpiece and the application chamber and thereby regulates the layer thickness of the paint layer on the workpiece, **characterised in that** the coating apparatus has a means which changes the viscosity of the water-based paint selectively, wherein the means cools the air stream (10) to below its dew point so that water condenses out which the air stream at least partially carries along with it and/or which supersaturates the air stream with water vapour.

2. Coating apparatus (9) according to claim 1, **characterised in that** it has a separator (A) which separates paint and/or water from the air stream.

3. Coating apparatus (9) according to claim 2, **characterised in that** it has a means (3) which recycles the paint and/or the water.

4. Coating apparatus (9) according to any one of the preceding claims, **characterised in that** it has a means (C) to determine the condition of a water-based paint.

5. Coating apparatus (9) according to any one of the preceding claims, **characterised in that** it has a means of temperature measurement which determines the temperature of the paint.

6. Coating apparatus (9) according to any one of the preceding claims, **characterised in that** it has a means to add water.

7. Method of painting a workpiece with a water-based paint with a coating head (D), wherein an air stream (10) is introduced into the coating head by means of which the thickness of the paint layer is adjusted, **characterised in that** the air stream is cooled to below its dew point and/or the air stream is saturated with water such that water separates downstream from the coating head and the separated water is mixed at least partially with the water-based paint.

8. Method according to claim 7, **characterised in that** the cooling of the air stream is regulated by a viscometer.

## Revendications

1. Dispositif d'enduction (9) avec chambre d'application, permettant l'application d'un vernis à base d'eau sur une pièce d'usinage en mouvement par rapport à la chambre d'application, tandis que la chambre d'application est soumise à une dépression qui aspire l'air (10) à travers une fente prévue entre la pièce d'usinage et la chambre d'application et régule ainsi l'épaisseur de la couche de vernis sur la pièce d'usinage, **caractérisé en ce que** le dispositif d'enduction présente un moyen qui modifie de manière sélective la viscosité du vernis à base d'eau, où le moyen refroidit le courant d'air (10) au-dessous de son point de rosée de sorte que l'eau s'évapore par condensation, en entraînant le courant d'air au moins partiellement et/ou en saturant le courant d'air avec de la vapeur d'eau.

2. Dispositif d'enduction (9) selon la revendication 1, **caractérisé en ce qu'**il présente un séparateur (A) permettant la séparation du vernis et/ou de l'eau par rapport au courant d'air.

3. Dispositif d'enduction (9) selon la revendication 2, **caractérisé en ce qu'**il présente un moyen (3) permettant de recycler le vernis et/ou l'eau.

4. Dispositif d'enduction (9) selon l'une des revendications précédentes, **caractérisé en ce qu'**il présente un moyen (C) permettant de déterminer l'état d'un vernis à base d'eau.

5. Dispositif d'enduction (9) selon l'une des revendications précédentes, **caractérisé en ce qu'**il présente une mesure de température permettant de déterminer la température du vernis.

6. Dispositif d'enduction (9) selon l'une des revendications précédentes, **caractérisé en ce qu'**il présente un apport d'eau.

7. Procédé de vernissage d'une pièce d'usinage avec un vernis à base d'eau avec une tête d'enduction (D), où un courant d'air (10) est introduit dans la tête d'enduction, courant d'air permettant de régler l'épaisseur de la couche de vernis, **caractérisé en ce que** le courant d'air est refroidi au-dessous de son point de rosée et/ou que le courant d'air est saturé de vapeur d'eau de telle sorte que l'eau se sépare en aval de la tête d'enduction et que l'eau séparée est mélangée au moins partiellement avec le vernis à base d'eau.

8. Procédé selon la revendication 7, **caractérisé en ce que** le refroidissement du courant d'air est régulé par un viscosimètre.
